# EUROPÄISCHE PATENTSCHRIFT

(11) **EP 3 914 466 B1**
(45) Veröffentlichungstag und Bekanntmachung des Hinweises auf die Patenterteilung: **03.08.2022**
(21) Anmeldenummer: 20702082.7
(22) Anmeldetag: 20.01.2020
(51) Int. Cl.: B60K 6/48, B60W 10/06, B60W 10/08, B60W 20/10, B60W 30/188, B60W 10/26, B60W 50/00

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ PERMETTANT DE FAIRE FONCTIONNER UN DISPOSITIF D'ENTRAÎNEMENT POUR UN VÉHICULE AUTOMOBILE ET DISPOSITIF D'ENTRAÎNEMENT CORRESPONDANT

(30) Priorität: 24.01.2019 DE 102019200840
(43) Veröffentlichungstag der Anmeldung: 01.12.2021
(73) Patentinhaber: Audi AG, 85045 Ingolstadt (DE)
(72) Erfinder: HALL, Matthew David, 71672 Marbach am Neckar (DE); XANDER, Benedikt, 74360 Ilsfeld (DE); ZEYER, Andreas, 70499 Stuttgart (DE); SCHIEDT, Guido, 71397 Leutenbach (DE)
(74) Vertreter: Dietz, Christopher Friedrich
(86) Internationale Anmeldenummer: PCT/EP2020/051299
(87) Internationale Veröffentlichungsnummer: WO 2020/152110

(56) Entgegenhaltungen:
- EP-A2- 1 987 995
- WO-A2-2009/021913
- DE-A1-102004 013 581
- DE-C1- 4 217 668

## Beschreibung

Die Erfindung betrifft ein Verfahren zum Betreiben einer Antriebseinrichtung für ein Kraftfahrzeug, wobei die Antriebseinrichtung ein als Brennkraftmaschine ausgestaltetes erstes Antriebsaggregat und ein als elektrische Maschine ausgestaltetes zweites Antriebsaggregat aufweist, die zumindest zeitweise gemeinsam ein Antriebsdrehmoment der Antriebseinrichtung an einer Abtriebswelle bereitstellen, wobei das Antriebsdrehmoment auf ein angefordertes Vorgabedrehmoment eingestellt wird, wobei in einer ersten Betriebsart vor einem Verändern einer Drehzahl der Abtriebswelle für das erste Antriebsaggregat aus mehreren Drehmomentkennlinien eine Drehmomentkennlinie ausgewählt wird, wobei in der ersten Betriebsart während des Veränderns der Drehzahl das erste Antriebsaggregat ausschließlich entsprechend der ausgewählten Drehmomentkennlinie zum Bereitstellen wenigstens eines Teils des Vorgabedrehmoments betrieben und ein Differenzdrehmoment des Vorgabedrehmoments zu dem von dem ersten Antriebsaggregat bereitgestellten Drehmoment mittels des zweiten Antriebsaggregats bereitgestellt wird. Die Erfindung betrifft weiterhin eine Antriebseinrichtung für ein Kraftfahrzeug.

Aus dem Stand der Technik ist beispielsweise die Druckschrift US 10,011,268 B2 bekannt. Diese beschreibt ein Verfahren zum Steuern eines Hybridfahrzeugs mit paralleler Architektur und mit einem unbekannten Geschwindigkeitsprofil zur Optimierung eines Kraftstoffverbrauchs.

Die Druckschrift EP 1 987 995 A2 beschreibt ein Verfahren zum Steuern eines Hybridfahrzeugs, das eine Brennkraftmaschine und eine elektrische Maschine aufweist. Wenn eine von einem Fahrer angeforderte Betriebsart eine Leistungsbetriebsart ist, die einem Beschleunigungsverhalten gegenüber einer Kraftstoffeffizienz eine größere Bedeutung zumisst, wird als ein Sollwert eines Drehmoments der Brennkraftmaschine ein Drehmoment der Leistungsbetriebsart verwendet, das größer ist als ein hinsichtlich des Kraftstoffverbrauchs optimales Drehmoment.

Weiterhin sind aus dem Stand der Technik die Druckschriften DE 10 2004 013 581 A1, WO 2009/021913 A1 und DE 42 17 668 C1 bekannt.

Es ist Aufgabe der Erfindung, ein Verfahren zum Betreiben einer Antriebseinrichtung für ein Kraftfahrzeug vorzuschlagen, welches gegenüber den bekannten Verfahren Vorteile aufweist, insbesondere einen deutlich effizienteren und/oder emissionsärmeren Betrieb der Antriebseinrichtung ermöglicht.

Dies wird erfindungsgemäß mit einem Verfahren zum Betreiben einer Antriebseinrichtung für ein Kraftfahrzeug mit den Merkmalen des Anspruchs 1 erreicht. Dabei ist vorgesehen, dass nach dem Auswählen der Drehmomentkennlinie eine der Drehmomentkennlinie entsprechende konstante Drosselklappenstellung an dem ersten Antriebsaggregat und/oder ein Ventiltrieb des ersten Antriebsaggregats auf eine der Drehmomentkennlinie entsprechende konstante Füllung eingestellt wird.

Grundsätzlich ist vorgesehen, dass in einer ersten Betriebsart vor einem Verändern einer Drehzahl der Abtriebswelle für das erste Antriebsaggregat aus mehreren Drehmomentkennlinien eine Drehmomentkennlinie ausgewählt wird, wobei in der ersten Betriebsart während des Veränderns der Drehzahl das erste Antriebsaggregat ausschließlich entsprechend der ausgewählten Drehmomentkennlinie zum Bereitstellen wenigstens eines Teils des Vorgabedrehmoments betrieben und ein Differenzdrehmoment des Vorgabedrehmoments zu dem von dem ersten Antriebsaggregat bereitgestellten Drehmoment mittels des zweiten Antriebsaggregats bereitgestellt wird.

Das Verfahren ist zum Betreiben der Antriebseinrichtung vorgesehen und ausgebildet, wobei die Antriebseinrichtung vorzugsweise Bestandteil des Kraftfahrzeugs ist. Die Antriebseinrichtung dient dem Antreiben des Kraftfahrzeugs, insoweit also dem Bereitstellen eines auf das Antreiben des Kraftfahrzeugs gerichteten Antriebsdrehmoments. Die Antriebseinrichtung stellt das Antriebsdrehmoment an der Abtriebswelle bereit. Die Abtriebswelle ist beispielsweise über wenigstens eine Schaltkupplung und/oder wenigstens ein Gangwechselgetriebe mit zumindest einer angetriebenen Radachse des Kraftfahrzeugs antriebstechnisch verbunden.

Alternativ ist die Abtriebswelle über die Schaltkupplung und/oder das Gangwechselgetriebe antriebstechnisch an das erste Antriebsaggregat und das zweite Antriebsaggregat angeschlossen. In diesem Fall ist vorzugsweise die Abtriebswelle starr und/oder permanent mit der wenigstens einen Radachse des Kraftfahrzeugs gekoppelt. Die Schaltkupplung ist beispielsweise eine Anfahrkupplung und das Gangwechselgetriebe ein Mehrganggetriebe, mittels welchem unterschiedliche Übersetzungen zwischen der Abtriebswelle und der wenigstens einen Radachse einstellbar sind.

Zum Bereitstellen des Antriebsdrehmoments an der Abtriebswelle weist die Antriebseinrichtung mehrere Antriebsaggregate auf, nämlich zumindest das erste Antriebsaggregat und das zweite Antriebsaggregat. Das erste Antriebsaggregat liegt in Form der Brennkraftmaschine und das zweite Antriebsaggregat in Form der elektrischen Maschine vor. Die Antriebseinrichtung kann insoweit auch als Hybridantriebseinrichtung bezeichnet werden. Die Antriebseinrichtung ist derart ausgestaltet, dass das erste Antriebsaggregat und das zweite Antriebsaggregat das Antriebsdrehmoment zumindest zeitweise gemeinsam bereitstellen.

Es kann also vorgesehen sein, dass das Antriebsdrehmoment allein mittels des ersten Antriebsaggregats und ohne das zweite Antriebsaggregat, allein mittels des zweiten Antriebsaggregats und ohne das erste Antriebsaggregat oder mithilfe sowohl des ersten Antriebsaggregats als auch des zweiten Antriebsaggregats bereitgestellt wird. Das erste Antriebsaggregat und das zweite Antriebsaggregat sind hierzu antriebstechnisch an die Abtriebswelle angeschlossen, vorzugsweise jeweils zumindest zeitweise starr.

Beispielsweise ist das erste Antriebsaggregat über eine Kupplung, insbesondere eine Trennkupplung, antriebstechnisch an die Abtriebswelle angeschlossen, wohingegen das zweite Antriebsaggregat permanent mit der Abtriebswelle antriebstechnisch gekoppelt ist, insbesondere starr. In einer ersten Schaltstellung der Trennkupplung ist das erste Antriebsaggregat mit der Abtriebswelle antriebstechnisch gekoppelt, insbesondere starr. In einer zweiten Schaltstellung ist hingegen das erste Antriebsaggregat von der Abtriebswelle entkoppelt. Beispielsweise ist das erste Antriebsaggregat zumindest zeitweise über das zweite Antriebsaggregat mit der Abtriebswelle antriebstechnisch gekoppelt. Insbesondere ist hierzu die Trennkupplung antriebstechnisch zwischen dem ersten Antriebsaggregat und dem zweiten Antriebsaggregat angeordnet.

Es kann jedoch auch vorgesehen sein, dass das zweite Antriebsaggregat über eine (weitere) Kupplung beziehungsweise eine (weitere) Trennkupplung an die Abtriebswelle antriebstechnisch angeschlossen ist. In diesem Fall ist das zweite Antriebsaggregat wahlweise mit der Abtriebswelle gekoppelt oder von ihr entkoppelt. Die weitere Kupplung liegt beispielsweise antriebstechnisch zwischen einer Zwischenwelle, an die das erste Antriebsaggregat über die Kupplung antriebstechnisch angeschlossen ist, und einem Gangwechselgetriebe vor. In anderen Worten ist die Zwischenwelle mittels der Kupplung von dem ersten Antriebsaggregat und mittels der weiteren Kupplung von dem Gangwechselgetriebe entkoppelbar.

Während des Betreibens der Antriebseinrichtung wird das von dieser bereitgestellte Antriebsdrehmoment auf das Vorgabedrehmoment eingestellt, insbesondere steuernd und/oder regelnd eingestellt. Das Vorgabedrehmoment wird beispielsweise von einem Fahrer des Kraftfahrzeugs und/oder einer Fahrerassistenzeinrichtung des Kraftfahrzeugs vorgegeben und an der Antriebseinrichtung eingestellt. In ersterem Fall wird das Vorgabedrehmoment vorzugsweise aus einer Stellung eines Bedienelements, insbesondere eines Fahrpedals beziehungsweise Gaspedals, ermittelt.

Es kann vorgesehen sein, dass das erste Antriebsaggregat und das zweite Antriebsaggregat derart angesteuert werden, dass sie das Antriebsdrehmoment gemeinsam derart bereitstellen, dass eine möglichst hohe Gesamteffizienz der Antriebseinrichtung in jedem Betriebspunkt beziehungsweise zu jedem Zeitpunkt erzielt wird. Dies ist bei einem konstanten Betriebspunkt, also bei konstantem Drehmoment sowie konstanter Drehzahl der Abtriebswelle, vergleichsweise einfach zu erzielen. Bei instationären Vorgängen ist eine solche Optimierung deutlich schwieriger. Aus diesem Grund ist es erfindungsgemäß grundsätzlich vorgesehen, eine stationäre Grundlast mittels des ersten Antriebsaggregats bereitzustellen und das zweite Antriebsaggregat für dynamische beziehungsweise instationäre Vorgänge zusätzlich heranzuziehen.

Hierzu wird für das erste Antriebsaggregat eine Drehmomentkennlinie aus mehreren Drehmomentkennlinien ausgewählt und anschließend diese ausgewählte Drehmomentkennlinie an dem ersten Antriebsaggregat eingestellt. Nachfolgend wird das erste Antriebsaggregat ausschließlich mit dieser Drehmomentkennlinie betrieben, also auch bei unterschiedlichen Drehzahlen an der Abtriebswelle, insbesondere bis zum Ende des Veränderns der Drehzahl. Trotz unterschiedlicher Betriebspunkte der Antriebseinrichtung erfolgt also zunächst kein Wechsel der ausgewählten Drehmomentkennlinie. Vielmehr wird das erste Antriebsaggregat zumindest über eine gewisse Zeitspanne permanent mit dieser betrieben. Unter der Drehmomentkennlinie ist eine Drehmoment-Drehzahl-Kennlinie zu verstehen, welche das Drehmoment des ersten Antriebsaggregats in Bezug zu seiner Drehzahl setzt.

Dies kann selbstverständlich dazu führen, dass das von dem ersten Antriebsaggregat bereitgestellte Drehmoment größer oder kleiner ist als das Vorgabedrehmoment. Das zweite Antriebsaggregat wird daher verwendet, um das an der Abtriebswelle anliegende Antriebsdrehmoment auf das angeforderte Vorgabedrehmoment einzustellen. Hierzu wird die Differenz zwischen dem Vorgabedrehmoment und dem von dem ersten Antriebsaggregat bereitgestellten Drehmoment berechnet. Diese Differenz, welche auch als Differenzdrehmoment bezeichnet werden kann, wird anschließend an dem zweiten Antriebsaggregat eingestellt, sodass schlussendlich an der Abtriebswelle das dem Vorgabedrehmoment entsprechende Antriebsdrehmoment anliegt.

Die beschriebene Vorgehensweise wird insbesondere während des Veränderns der Drehzahl der Abtriebswelle durchgeführt. So erfolgt das Auswählen der Drehmomentkennlinie aus den mehreren Drehmomentkennlinien bereits vor dem Verändern der Drehzahl, insbesondere unmittelbar vor einem Beginn des Veränderns, oder unmittelbar zu Beginn des Veränderns. Während des Veränderns der Drehzahl wird nachfolgend das erste Antriebsaggregat entsprechend der ausgewählten Drehmomentkennlinie betrieben, insbesondere bis das Verändern der Drehzahl abgeschlossen ist. Beispielsweise ist es also vorgesehen, die beschriebene Vorgehensweise einzuleiten, sobald eine Veränderung der Drehzahl eintritt, und solange beizubehalten, bis die Veränderung der Drehzahl abgeschlossen ist. Vor dem Verändern der Drehzahl und nach dem Verändern der Drehzahl ist insoweit die Drehzahl konstant, zumindest über einen gewissen Zeitraum. Beispielsweise gilt das Verändern der Drehzahl als abgeschlossen, falls die Drehzahl nach dem Verändern über einen Zeitraum von mindestens 0,5 s, mindestens 1 s, mindestens 2,5 s oder mindestens 5 s konstant ist.

Die beschriebene Vorgehensweise ermöglicht ein besonders effizientes Betreiben der Antriebseinrichtung, vor allem während eines instationären Betriebs der Antriebseinrichtung. Zudem ermöglicht die Vorgehensweise die Verwendung einer konstruktiv äußerst einfach ausgestalteten Antriebseinrichtung, insbesondere eines einfach ausgestalteten ersten Antriebsaggregats. Die Antriebseinrichtung kann insoweit zum einen kostengünstig und zum anderen gewichtssparend ausgeführt sein.

Die Erfindung sieht vor, dass nach dem Auswählen der Drehmomentkennlinie eine der Drehmomentkennlinie entsprechende konstante Drosselklappenstellung an dem ersten Antriebsaggregat und/oder ein Ventiltrieb des ersten Antriebsaggregats auf eine der Drehmomentkennlinie entsprechende konstante Füllung eingestellt wird. Beispielsweise entspricht jede der Drehmomentkennlinien einer bestimmten Drosselklappenstellung des ersten Antriebsaggregats, insbesondere über einen gesamten Nenndrehzahlbereich des ersten Antriebsaggregats oder einen Großteil des Nenndrehzahlbereichs hinweg, also über mindestens 50 %, mindestens 75 % oder mindestens 90 % des Nenndrehzahlbereichs. Es ist also vorgesehen, während des Veränderns der Drehzahl die Drosselklappenstellung des ersten Antriebsaggregats konstant zu halten, insbesondere um Pulsationen im Luftpfad zu verringern.

Unter dem Nenndrehzahlbereich ist ein Drehzahlbereich zu verstehen, der von einer Minimaldrehzahl des ersten Antriebsaggregats bis zu einer Maximaldrehzahl des ersten Antriebsaggregats reicht. Die Minimaldrehzahl ist diejenige Drehzahl, aber welcher das erste Antriebsaggregat selbsttätig, also ohne externe Drehmomentzufuhr, lauffähig ist und insoweit seine Drehzahl selbsttätig vergrößern kann. Die Maximaldrehzahl ist die Drehzahl, auf welche das erste Antriebsaggregat nach oben während eines normalen Betriebs begrenzt ist, also die maximale Drehzahl, für die das erste Antriebsaggregat vorgesehen ist.

Zusätzlich oder alternativ kann der Ventiltrieb des ersten Antriebsaggregats verwendet werden, um für das erste Antriebsaggregat eine Füllung beziehungsweise Zylinderfüllung einzustellen, die der Drehmomentkennlinie entspricht. Dabei ist jeder Drehmomentkennlinie genau eine konstante Füllung zugeordnet, welche während des Veränderns der Drehzahl durchgehend herangezogen wird. Der Ventiltrieb ist bevorzugt ein vollvariabler Ventiltrieb. Ist ein solcher Ventiltrieb vorgesehen, so kann es besonders bevorzugt vorgesehen sein, das erste Antriebsaggregat drosselklappenlos auszugestalten, sodass ein Ansaugquerschnitt des ersten Antriebsaggregats über der Zeit gesehen durchgehend konstant ist. Durch das Konstanthalten der Drosselklappenstellung beziehungsweise der Füllung ist ein äußerst rasches Ansprechen des ersten Antriebsaggregats sichergestellt, sodass die Veränderung der Drehzahl schnell durchgeführt werden kann. Entsprechend ergibt sich eine deutliche Dynamiksteigerung im Vergleich zu herkömmlichen Antriebseinrichtungen.

Eine weitere Ausführungsform der Erfindung sieht vor, dass als erstes Antriebsaggregat eine drosselklappenlose Brennkraftmaschine und/oder eine Saugbrennkraftmaschine verwendet wird. Auf die Möglichkeit, die Brennkraftmaschine drosselklappenlos auszugestalten, wurde vorstehend bereits hingewiesen. Dies ist insbesondere der Fall, falls die Brennkraftmaschine über den vollvariablen Ventiltrieb verfügt, mittels welchem die Füllung von Zylindern des ersten Antriebsaggregats auf die der Drehmomentkennlinie entsprechende Füllung einstellbar ist.

Zusätzlich oder alternativ kann die Brennkraftmaschine in Form der Saugbrennkraftmaschine beziehungsweise als Saugmotor vorliegen. Insbesondere weist die Brennkraftmaschine in diesem Fall keinen Abgasturbolader und/oder keinen Kompressor auf, mittels welchem der Brennkraftmaschine zugeführtes Frischgas komprimiert wird. Der Brennkraftmaschine wird insoweit das Frischgas unkomprimiert zugeführt. Die Ausgestaltung als Saugbrennkraftmaschine ist konstruktiv vergleichsweise einfach und ermöglicht zudem eine hohe Dynamik, weil keine Nebenaggregate, wie beispielsweise der Abgasturbolader beziehungsweise der Kompressor auf den Betriebspunkt der Antriebseinrichtung eingestellt werden müssen.

Eine Weiterbildung der Erfindung sieht vor, dass das Auswählen der Drehmomentkennlinie anhand eines vor dem Verändern der Drehzahl vorliegenden Vorgabedrehmoments und/oder eines Ladestands eines Energiespeichers für das zweite Antriebsaggregat und/oder einer Temperatur der Antriebseinrichtung erfolgt. Beispielsweise wird die Drehmomentkennlinie derart ausgewählt, dass sie möglichst nah an dem Vorgabedrehmoment liegt, welches vor dem Verändern der Drehzahl vorliegt. Zusätzlich kann anhand des Ladestands entschieden werden, ob die ausgewählte Drehmomentkennlinie bei gegebener Drehzahl ein Drehmoment bereitstellen soll, welches größer oder kleiner ist als das Vorgabedrehmoment.

So wird bei niedrigem Ladestand beispielsweise eine Drehmomentkennlinie ausgewählt, welche bei der gegebenen Drehzahl größer ist als das Vorgabedrehmoment wohingegen bei hohem Ladestand die Drehmomentkennlinie derart ausgewählt wird, dass das Drehmoment bei gegebener Drehzahl kleiner ist als das Vorgabedrehmoment. Die gegebene Drehzahl ist beispielsweise die momentane Drehzahl des Antriebsaggregats und/oder der Abtriebswelle beziehungsweise eine minimale Drehzahl oder eine maximale Drehzahl, die von der Drehmomentkennlinie umfasst ist.

Selbstverständlich kann bei dem Auswählen der Drehmomentkennlinie zusätzlich oder alternativ die Temperatur der Antriebseinrichtung, insbesondere des zweiten Antriebaggregats herangezogen werden. Beispielsweise wird eine Drehmomentkennlinie mit umso kleinerem Drehmoment ausgewählt, je höher die Temperatur der Antriebseinrichtung ist, sodass das zweite Antriebsaggregat antriebstechnisch entlastet wird. Umgekehrt wird eine Drehmomentkennlinie mit umso größerem Drehmoment ausgewählt, je niedriger die Temperatur ist. Die beschriebene Vorgehensweise ermöglicht ein besonders effizientes Betreiben der Antriebseinrichtung.

Im Rahmen einer weiteren Ausführungsform der Erfindung ist vorgesehen, dass die ausgewählte Drehmomentkennlinie bis zu einem Gangwechsel eines Gangwechselgetriebes beibehalten wird und erst bei dem Gangwechsel die Drehmomentkennlinie erneut aus den mehreren Drehmomentkennlinien ausgewählt wird. Der Gangwechsel wird beispielsweise im Rahmen des Veränderns der Drehzahl vorgenommen. Es kann jedoch auch vorgesehen sein, dass ganz unabhängig von einem Verändern der Drehzahl das erste Antriebsaggregat durchgehend mit der ausgewählten Drehmomentkennlinie betrieben wird und eine erneute Auswahl der Drehmomentkennlinie erst im Rahmen des Gangwechsels erfolgt.

Das Gangwechselgetriebe kann, wie bereits dargelegt, an die Abtriebswelle angeschlossen sein, sodass über das Gangwechselgetriebe eine antriebstechnische Verbindung zwischen der Abtriebswelle und der wenigstens einen Radachse des Kraftfahrzeugs hergestellt ist. Es kann alternativ jedoch auch vorgesehen sein, dass die Abtriebswelle über das Gangwechselgetriebe an das erste Antriebsaggregat und das zweite Antriebsaggregat angeschlossen. Einerseits des Gangwechselgetriebes liegen insoweit das erste Antriebsaggregat und das zweite Antriebsaggregat und andererseits die Abtriebswelle vor. Bevorzugt sind das erste Antriebsaggregat und das zweite Antriebsaggregat in diesem Fall antriebstechnisch an eine gemeinsame Ausgangswelle angeschlossen, die über das Gangwechselgetriebe antriebstechnisch wiederum mit der Abtriebswelle verbunden ist. Bevorzugt sind also das erste Antriebsaggregat und das zweite Antriebsaggregat lediglich über die Ausgangswelle mit der Abtriebswelle antriebstechnisch gekoppelt beziehungsweise koppelbar. Die Ausgangswelle kann auch als Zwischenwelle bezeichnet werden. In jedem Fall ist das Gangwechselgetriebe Bestandteil der Antriebseinrichtung.

Beispielsweise ist jedem Gang des Gangwechselgetriebes wenigstens eine der Drehmomentkennlinien, insbesondere genaue eine der Drehmomentkennlinien, zugeordnet. Wird der entsprechende Gang an dem Gangwechselgetriebe eingestellt, so wird die ausgewählte Drehmomentkennlinie gleich der dem entsprechenden Gang zugeordneten Drehmomentkennlinie gesetzt und bis zu einem erneuten Gangwechsel beibehalten. In anderen Worten wird die Drehmomentkennlinie ausschließlich bei einem Gangwechsel des Gangwechselgetriebes gewählt, insbesondere erneut gewählt. Hierdurch wird ein besonders effektives Betreiben der Antriebseinrichtung möglich.

Eine weitere Ausführungsform der Erfindung sieht vor, dass das erste Antriebsaggregat eine erste Nennleistung und das zweite Antriebsaggregat eine zweite Nennleistung aufweist, wobei die erste Nennleistung um einen Faktor von höchstens 5, höchstens 4, höchstens 3 oder höchstens 2 größer gewählt wird als die zweite Nennleistung oder gleich der zweiten Nennleistung gewählt wird. Je näher die erste Nennleistung und die zweite Nennleistung beieinanderliegen, umso besser kann das zweite Antriebsaggregat das erste Antriebsaggregat während instationärer Vorgänge unterstützen. Besonders bevorzugt entspricht daher die zweite Nennleistung der ersten Nennleistung, sodass die beiden Antriebsaggregate insoweit die gleiche Nennleistung aufweisen. Es kann jedoch vorgesehen sein, dass die erste Nennleistung größer ist als die zweite Nennleistung. Dies ist jedoch auf den Faktor von höchstens 5 oder weniger begrenzt. Hierzu wird auf die angegebenen Werte verwiesen. In jedem Fall weisen die Nennleistungen die gleiche Größenordnung auf, sodass ein effektives Unterstützen des ersten Antriebsaggregats mittels des zweiten Antriebsaggregats erfolgen kann.

Eine Weiterbildung der Erfindung sieht vor, dass das erste Antriebsaggregat und das zweite Antriebsaggregat mittels eines gemeinsamen Kühlers temperiert werden. Die beiden Antriebsaggregate, also das erste Antriebsaggregat und das zweite Antriebsaggregat, sind an denselben Kühlmittelkreislauf angeschlossen, in welchem auch der gemeinsame Kühler vorliegt. Vorzugsweise ist der gemeinsame Kühler ein Hauptkühler des Kühlmittelkreislaufs, insbesondere der einzige Kühler. Besonders bevorzugt weist also der Kühlmittelkreislauf neben dem gemeinsamen Kühler keinen weiteren Kühler auf. Unter dem Kühler wird insbesondere ein direkter Kühler verstanden. Durch die beschriebene Betriebsweise wird eine konstruktiv einfache Ausgestaltung ermöglicht.

Eine weitere Ausgestaltung der Erfindung sieht vor, dass die mehreren Drehmomentkennlinien eine Vielzahl von diskreten Drehmomentkennlinien umfassen, deren Drehmomente sich bei einer bestimmten Drehzahl um mindestens 5%, mindestens 10%, mindestens 15% oder mindestens 20% eines Nenndrehmoments des ersten Antriebsaggregats unterscheiden. Die bestimmte Drehzahl kann beispielsweise eine minimale Drehzahl oder eine maximale Drehzahl sein, welche von den Drehmomentkennlinien erfasst wird. Die Drehzahl kann jedoch grundsätzlich beliebig gewählt sein. Die diskreten Drehmomentkennlinien verlaufen separat voneinander und weisen keine Überschneidungspunkte auf. Vielmehr sind sie deutlich voneinander beabstandet, nämlich bei der bestimmten Drehzahl um Drehmomente, die die genannten Werte aufweisen.

Beispielsweise weisen alle diskreten Drehmomentkennlinien bei der bestimmten Drehzahl denselben Abstand von den jeweils benachbarten Drehmomentkennlinien auf. Es können jedoch auch unterschiedliche Abstände realisiert sein, beispielsweise sind die Abstände bei niedrigerem Drehmoment kleiner als bei größeren Drehmoment oder umgekehrt. Vorzugsweise sind die diskreten Drehmomentkennlinien fest hinterlegt, werden also während des Betriebs der Antriebseinrichtung nicht angepasst. Bevorzugt sind die Drehmomentkennlinien bereits ab Werk in der Antriebseinrichtung hinterlegt. Hierdurch wird eine besonders effektive Steigerung der Effizienz erzielt. Schließlich kann im Rahmen einer weiteren Ausgestaltung der Erfindung

vorgesehen sein, dass in einer zweiten Betriebsart das erste Antriebsaggregat und das zweite Antriebsaggregat zum Bereitstellen des dem Vorgabedrehmoment entsprechenden Antriebsdrehmoments derart betrieben werden, dass sich für einen momentanen Betriebspunkt ein minimaler Energieverbrauch ergibt. Auf diese Vorgehensweise wurde vorstehend bereits hingewiesen. Beispielsweise wird aus der ersten Betriebsart in die zweite Betriebsart gewechselt, wenn die Drehzahl konstant ist beziehungsweise über einen bestimmten Zeitraum hinweg konstant war. Insoweit wird beispielsweise die zweite Betriebsart für konstante Drehzahlen und die erste Betriebsart bei sich verändernden Drehzahlen verwendet, um jeweils eine besonders hohe Effizienz der Antriebseinrichtung zu erzielen. Der bestimmte Zeitraum beträgt beispielsweise wenigstens 1 s, wenigstens 5 s, wenigstens 10 s, wenigstens 15 s oder wenigstens 30 s.

Die Erfindung betrifft weiterhin eine Antriebseinrichtung für ein Kraftfahrzeug, insbesondere zur Durchführung des Verfahrens gemäß den Ausführungen im Rahmen dieser Beschreibung, wobei die Antriebseinrichtung ein als Brennkraftmaschine ausgestaltetes erstes Antriebsaggregat und ein als elektrische Maschine ausgestaltetes zweites Antriebsaggregat aufweist, die zumindest zeitweise gemeinsam ein Antriebsdrehmoment der Antriebseinrichtung an einer Abtriebswelle bereitstellen, wobei das Antriebsdrehmoment auf ein angefordertes Vorgabedrehmoment einstellbar ist beziehungsweise eingestellt wird.

Dabei ist die Antriebseinrichtung dazu ausgebildet, in einer ersten Betriebsart vor dem Verändern einer Drehzahl der Abtriebswelle für das erste Antriebsaggregat aus mehreren Drehmomentkennlinie eine Drehmomentkennlinie auszuwählen, wobei in der ersten Betriebsart während des Veränderns der Drehzahl das erste Antriebsaggregat ausschließlich entsprechend der ausgewählten Drehmomentkennlinie zum Bereitstellen wenigstens eines Teils des Vorgabedrehmoments betrieben und ein Differenzdrehmoment des Vorgabedrehmoments zu dem von dem ersten Antriebsaggregat bereitgestellten Drehmoment mittels des zweiten Antriebaggregats bereitgestellt wird. Weiterhin ist die Antriebseinrichtung dazu ausgebildet, dass nach dem Auswählen der Drehmomentkennlinie eine der Drehmomentkennlinie entsprechende konstante Drosselklappenstellung an dem ersten Antriebsaggregat und/oder ein Ventiltrieb des ersten Antriebsaggregats auf eine der Drehmomentkennlinie entsprechende konstante Füllung eingestellt wird.

Auf die Vorteile einer derartigen Ausgestaltung der Antriebseinrichtung beziehungsweise einer derartigen Vorgehensweise wurde bereits hingewiesen. Sowohl die Antriebseinrichtung für das Kraftfahrzeug als auch das Verfahren zu ihrem Betreiben können gemäß den Ausführungen im Rahmen dieser Beschreibung auf vorteilhafte Weise weitergebildet sein, sodass insoweit auf diese verwiesen wird.

Im Rahmen einer besonders bevorzugten Ausgestaltung der Erfindung ist vorgesehen, dass das zweite Antriebsaggregat achsparallel zu dem ersten Antriebsaggregat angeordnet und über eine Getriebeanordnung mit dem ersten Antriebsaggregat antriebstechnisch koppelbar ist. Unter der achsparallelen Anordnung wird verstanden, dass Maschinenwellen des ersten Antriebsaggregats und des zweiten Antriebsaggregats parallel zueinander vorliegen. Zudem ist das zweite Antriebsaggregat bevorzugt neben dem ersten Antriebsaggregat angeordnet, sodass die beiden Antriebsaggregat in axialer Richtung bezüglich ihrer Drehachsen in Überdeckung miteinander angeordnet sind. Vorzugsweise ist das zweite Antriebsaggregat vollständig neben dem ersten Antriebsaggregat angeordnet, sodass also das gesamte zweite Antriebsaggregat mit dem ersten Antriebsaggregat in Überdeckung steht oder umgekehrt.

Die beiden Antriebsaggregate sind vorzugsweise über die Getriebeanordnung miteinander gekoppelt, insbesondere starr und/oder permanent, oder zumindest koppelbar. Die Getriebeanordnung weist beispielsweise eine von eins verschiedene Übersetzung auf und bindet das zweite Antriebsaggregat an die Abtriebswelle oder eine mit dem ersten Antriebsaggregat gekoppelte oder koppelbare Welle an. Beispielsweise ist das erste Antriebsaggregat über eine Trennkupplung mit einer Zwischenwelle antriebstechnisch verbunden, welche über das Gangwechselgetriebe an die Abtriebswelle angeschlossen ist. Die Getriebeanordnung stellt nunmehr eine Verbindung zwischen dem zweiten Antriebsaggregat und der Zwischenwelle her, sodass das zweite Antriebsaggregat über die Getriebeanordnung an die Zwischenwelle und über diese einerseits an das erste Antriebsaggregat und andererseits an das Gangwechselgetriebe und mithin die Abtriebswelle angeschlossen ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug,
- Figur 2: ein Drehmoment-Drehzahl-Diagramm für die Antriebseinrichtung, sowie
- Figur 3: Diagramme zur Erläuterung eines Betriebsverfahrens der Antriebseinrichtung.

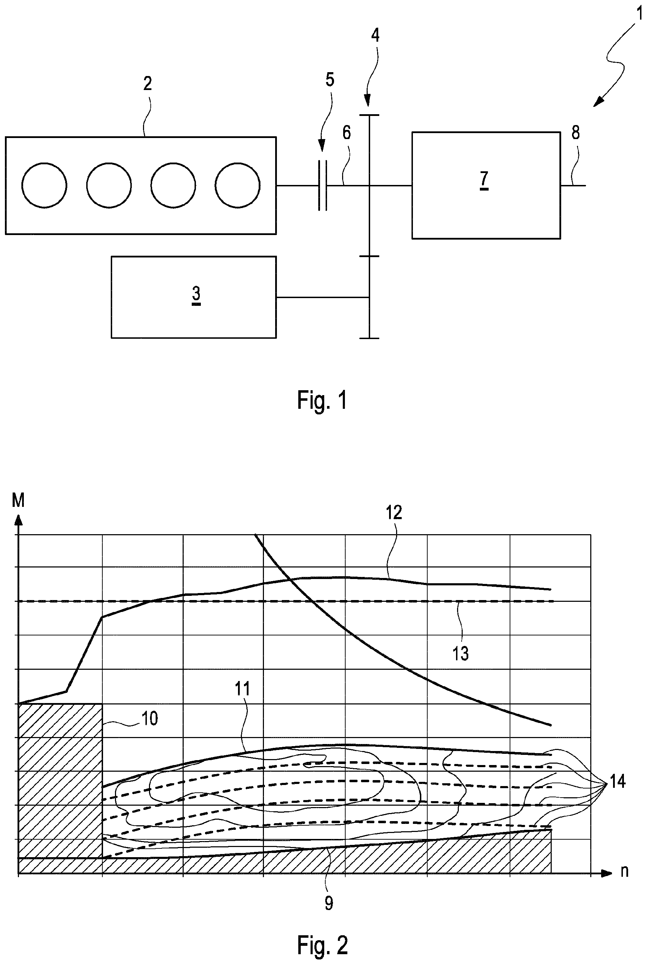

Die Figur 1 zeigt eine schematische Darstellung einer Antriebseinrichtung 1 für ein Kraftfahrzeug. Die Antriebseinrichtung 1 verfügt über ein erstes Antriebsaggregat 2 sowie ein zweites Antriebsaggregat 3. Das erste Antriebsaggregat 2 ist als Brennkraftmaschine und das zweite Antriebsaggregat 3 als elektrische Maschine ausgestaltet. Die beiden Antriebsaggregate 2 und 3 sind über eine Getriebeanordnung 4 antriebstechnisch miteinander gekoppelt beziehungsweise koppelbar. Besonders bevorzugt sind die beiden Antriebsaggregate 2 und 3 - wie hier dargestellt - achsparallel nebeneinander angeordnet. Auch andere Anordnungen sind jedoch realisierbar.

In dem hier dargestellten Ausführungsbeispiel ist das erste Antriebsaggregat 2 über eine Trennkupplung 5 mit einer Zwischenwelle 6 antriebstechnisch verbunden, an welche sowohl die Getriebeanordnung 4 als auch ein Gangwechselgetriebe 7 angeschlossen ist. Über das Gangwechselgetriebe 7 ist eine Abtriebswelle 8 antriebstechnisch an die Zwischenwelle 6 angeschlossen. Die Abtriebswelle 8 ist über das Gangwechselgetriebe 7 wahlweise mittels des ersten Antriebsaggregats 2, des zweiten Antriebsaggregats 3 oder beiden Antriebsaggregaten 2 und 3 antreibbar. Optional kann antriebstechnisch zwischen der Zwischenwelle 6 und der Abtriebswelle 7 eine weitere Kupplung, insbesondere eine weitere Trennkupplung, angeordnet sein, vorzugsweise antriebstechnisch zwischen der Zwischenwelle 6 und dem Gangwechselgetriebe 7.

Die Figur 2 zeigt ein Diagramm, in welchem ein Drehmoment M über einer Drehzahl n aufgetragen ist. Vorzugsweise beschreibt das Diagramm die Antriebsaggregate 2 und 3 gemeinsam, sodass das Drehmoment das an der Zwischenwelle 6 anliegende Antriebsdrehmoment und die Drehzahl n die Drehzahl der Zwischenwelle 6 ist. Erkennbar sind eine Drehmomentuntergrenze 9 sowie eine Drehzahluntergrenze 10, bei deren Unterschreiten das an der Zwischenwelle 6 anliegende Antriebsdrehmoment allein mittels des zweiten Antriebsaggregats 3 bereitgestellt wird. Überschreitet das Antriebsdrehmoment, welches auf ein Vorgabedrehmoment eingestellt wird, die Drehmomentuntergrenze 9 und die Drehzahl der Zwischenwelle 6 die Drehzahluntergrenze 10 so wird zum Antreiben der Zwischenwelle 6 zusätzlich zu dem zweiten Antriebsaggregat 3 das erste Antriebsaggregat 2 herangezogen.

In dem Diagramm ist ein Maximaldrehmoment 11 des ersten Antriebsaggregats 2 angedeutet. Überschreitet das Antriebsdrehmoment dieses Maximaldrehmoment 11, so kann also das Antriebsdrehmoment nicht allein mittels des ersten Antriebsaggregats 2 bereitgestellt werden. Vielmehr wird zusätzlich das zweite Antriebsaggregat 3 zum Bereitstellen des Antriebsdrehmoments betrieben. Ebenfalls gezeigt ist ein Gesamtdrehmoment 12, welches theoretisch von den beiden Antriebsaggregaten 2 und 3 bereitgestellt werden könnte. Dieses Gesamtdrehmoment 12 wird jedoch auf ein Getriebegrenzdrehmoment 13 begrenzt, für welches das Gangwechselgetriebe 7 ausgelegt ist.

Es ist erkennbar, dass für das erste Antriebsaggregat 2 mehrere Drehmomentkennlinien 14 angedeutet sind, wobei die Drehmomentuntergrenze 9 und das Maximaldrehmoment 11 ebenfalls als Drehmomentkennlinien 14 verwendet werden können. Während eines Betriebs der Antriebseinrichtung 1 ist es nun vorgesehen, zumindest in einer ersten Betriebsart vor einem Verändern der Drehzahl der Abtriebswelle 8 für das erste Antriebsaggregat 2 aus den mehreren Drehmomentkennlinien 14 eine konkrete Drehmomentkennlinie 14 auszuwählen. Während des Veränderns der Drehzahl soll das erste Antriebsaggregat 2 ausschließlich entsprechend der ausgewählten Drehmomentkennlinie 14 betrieben werden, um wenigstens einen Teil des Antriebsdrehmoments beziehungsweise des Vorgabedrehmoments bereitzustellen. Das zweite Antriebsaggregat 3 wird hingegen betrieben, um eine Differenz zwischen dem von dem ersten Antriebsaggregat 2 bereitgestellten Drehmoment und dem Vorgabedrehmoment auszugleichen.

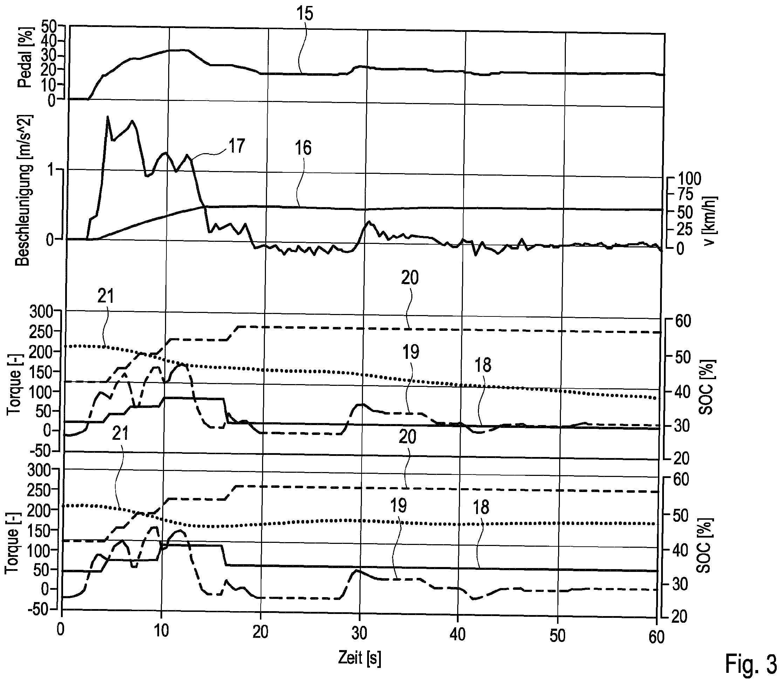

Die Figur 3 zeigt mehrere Diagramme, anhand welchen das Verfahren zum Betreiben der Antriebseinrichtung 1 näher erläutert wird. In dem obersten Diagramm gibt ein Verlauf 15 eine Fahrpedalstellung über der Zeit t an. In dem darunterliegenden Diagramm zeigt ein Verlauf 16 eine Fahrgeschwindigkeit des Kraftfahrzeugs, welche mit einer Drehzahl der Abtriebswelle 8 korrespondiert, sowie ein Verlauf 17 die zu dem Verlauf 16 passende Beschleunigung.

Die beiden unteren Diagramme zeigen jeweils Verläufe 18, 19, 20 und 21. Der Verlauf 18 beschreibt das von dem ersten Antriebsaggregat 2 bereitgestellte Drehmoment, der Verlauf 19 das von dem zweiten Antriebsaggregat 3 bereitgestellte Drehmoment. In Summe ergeben die beiden Drehmomente das Antriebsdrehmoment. Der Verlauf 20 zeigt den derzeit eingelegten Gang und der Verlauf 21 einen Ladestand eines Energiespeichers. Es ist anhand des Verlaufs 18 erkennbar, dass das Drehmoment des ersten Antriebsaggregats 2 stufenweise verändert wird, also nicht unmittelbar dem Verlauf 15 folgt, der das Vorgabedrehmoment über der Zeit zeigt.

Ebenso ist erkennbar, dass das Drehmoment des ersten Antriebsaggregats 2 in dem gezeigten Ausführungsbeispiel lediglich dann geändert wird, wenn ein Gangwechsel mithilfe des Gangwechselgetriebes 7 erfolgt (siehe Verlauf 20). Allenfalls erfolgt bei sich verändernder Drehzahl beziehungsweise Geschwindigkeit eine Veränderung des Drehmoments des ersten Antriebsaggregats 2 gemäß der ausgewählten Drehmomentkennlinie 14. Die unterschiedlichen Niveaus des Drehmoments des ersten Antriebsaggregats 2 resultieren aus der Verwendung der vorgegebenen Drehmomentkennlinien. Jedem Niveau des Drehmoments ist hierbei eine der Drehmomentkennlinien zugeordnet.

Das obere der beiden Diagramme, in welchen die Verläufe 18, 19, 20 und 21 dargestellt sind, zeigt diese für einen höheren Ladestand des Energiespeichers als das untere Diagramm. Entsprechend wird in dem oberen Diagramm ein größerer Anteil des Antriebsdrehmoments mithilfe des zweiten Antriebsaggregats 3 erzeugt, wohingegen das Drehmoment des ersten Antriebsaggregats 2 niedriger eingestellt wird als für das untere Diagramm. Folglich zeigt sich anhand des Verlaufs 21 für das obere Schaubild eine rasche Abnahme des Ladestands des Energiespeichers, während in dem unteren Diagramm der Ladestand nahezu konstant bleibt.

Mithilfe der beschriebenen Vorgehensweise zum Betreiben der Antriebseinrichtung 1 wird ein besonders effizienter Betrieb erzielt, insbesondere im Falle eines instationären Betriebs der Antriebseinrichtung mit einer Veränderung der Drehzahl der Abtriebswelle 8 und/oder der Zwischenwelle 6. Hierbei wird mithilfe des ersten Antriebsaggregats 2 ein Grunddrehmoment bereitgestellt, welches jeweils über längere Zeiträume konstant beziehungsweise bei sich verändernder Drehzahl auf der gewählten Drehmomentkennlinie 14 gehalten wird. Dynamische Vorgänge, also rasche Änderungen des Antriebsdrehmoments, werden mithilfe des zweiten Antriebsaggregats 3 umgesetzt.

### BEZUGSZEICHENLISTE

- 1: Antriebseinrichtung
- 2: erstes Antriebsaggregat
- 3: zweites Antriebsaggregat
- 4: Getriebeanordnung
- 5: Trennkupplung
- 6: Zwischenwelle
- 7: Gangwechselgetriebe
- 8: Abtriebswelle
- 9: Drehmomentuntergrenze
- 10: Drehzahluntergrenze
- 11: Maximaldrehmoment
- 12: Gesamtdrehmoment
- 13: Getriebegrenzdrehmoment
- 14: Drehmomentkennlinien
- 15: Verlauf
- 16: Verlauf
- 17: Verlauf
- 18: Verlauf
- 19: Verlauf
- 20: Verlauf
- 21: Verlauf

## Patentansprüche

1. Verfahren zum Betreiben einer Antriebseinrichtung (1) für ein Kraftfahrzeug, wobei die Antriebseinrichtung (1) ein als Brennkraftmaschine ausgestaltetes erstes Antriebsaggregat (2) und ein als elektrische Maschine ausgestaltetes zweites Antriebsaggregat (3) aufweist, die zumindest zeitweise gemeinsam ein Antriebsdrehmoment der Antriebseinrichtung (1) an einer Abtriebswelle (8) bereitstellen, wobei das Antriebsdrehmoment auf ein angefordertes Vorgabedrehmoment eingestellt wird, wobei in einer ersten Betriebsart vor einem Verändern einer Drehzahl der Abtriebswelle (8) für das erste Antriebsaggregat (2) aus mehreren Drehmomentkennlinien (14) eine Drehmomentkennlinie (14) ausgewählt wird, wobei in der ersten Betriebsart während des Veränderns der Drehzahl das erste Antriebsaggregat (2) ausschließlich entsprechend der ausgewählten Drehmomentkennlinie (14) zum Bereitstellen wenigstens eines Teils des Vorgabedrehmoments betrieben und ein Differenzdrehmoment des Vorgabedrehmoments zu dem von dem ersten Antriebsaggregat (2) bereitgestellten Drehmoment mittels des zweiten Antriebsaggregats (3) bereitgestellt wird, **dadurch gekennzeichnet, dass** nach dem Auswählen der Drehmomentkennlinie (14) eine der Drehmomentkennlinie (14) entsprechende konstante Drosselklappenstellung an dem ersten Antriebsaggregat (2) und/oder ein Ventiltrieb des ersten Antriebsaggregats (2) auf eine der Drehmomentkennlinie (14) entsprechende konstante Füllung eingestellt wird.

2. Verfahren nach Anspruch 1, **dadurch gekennzeichnet, dass** das Auswählen der Drehmomentkennlinie (14) anhand eines vor dem Verändern der Drehzahl vorliegenden Vorgabedrehmoments und/oder eines Ladestands eines Energiespeichers für das zweite Antriebsaggregat (3) und/oder einer Temperatur der Antriebseinrichtung (1) erfolgt.

3. Verfahren nach einem der vorhergehenden Ansprüche, **dadurch gekennzeichnet, dass** die ausgewählte Drehmomentkennlinie (14) bis zu einem Gangwechsel eines Gangwechselgetriebes (7) beibehalten wird und erst bei dem Gangwechsel die Drehmomentkennlinie (14) erneut aus den mehreren Drehmomentkennlinien (14) ausgewählt wird.

4. Verfahren nach einem der vorhergehenden Ansprüche, **dadurch gekennzeichnet, dass** die mehreren Drehmomentkennlinien (14) eine Vielzahl von diskreten Drehmomentkennlinien (14) umfassen, deren Drehmomente sich bei einer bestimmten Drehzahl um mindestens 5%, mindesten 10%, mindestens 15% oder mindestens 20% eines Nenndrehmoments des ersten Antriebsaggregats (2) unterscheiden.

5. Verfahren nach einem der vorhergehenden Ansprüche, **dadurch gekennzeichnet, dass** in einer zweiten Betriebsart das erste Antriebsaggregat (2) und das zweite Antriebsaggregat (3) zum Bereitstellen des dem Vorgabedrehmoment entsprechenden Antriebsdrehmoments derart betrieben werden, dass sich für einen momentanen Betriebspunkt ein minimaler Energieverbrauch ergibt.

6. Antriebseinrichtung (1) für ein Kraftfahrzeug, insbesondere zur Durchführung des Verfahrens nach einem oder mehreren der vorhergehenden Ansprüche, die ein als Brennkraftmaschine ausgestaltetes ersten Antriebsaggregat (2) und ein als elektrische Maschine ausgestaltetes zweites Antriebsaggregat (3) aufweist, die zumindest zeitweise gemeinsam ein Antriebsdrehmoment der Antriebseinrichtung (1) an einer Abtriebswelle (8) bereitstellen, wobei das Antriebsdrehmoment auf ein angefordertes Vorgabedrehmoment einstellbar ist, wobei die Antriebseinrichtung (1) dazu ausgebildet ist, in einer ersten Betriebsart vor einem Verändern einer Drehzahl der Abtriebswelle (8) für das erste Antriebsaggregat (2) aus mehreren Drehmomentkennlinien (14) eine Drehmomentkennlinie (14) auszuwählen, wobei in der ersten Betriebsart während des Veränderns der Drehzahl das erste Antriebsaggregat (2) ausschließlich entsprechend der ausgewählten Drehmomentkennlinie (14) zum Bereitstellen wenigstens eines Teils des Vorgabedrehmoments betrieben und ein Differenzdrehmoment des Vorgabedrehmoments zu dem von dem ersten Antriebsaggregat (2) bereitgestellten Drehmoment mittels des zweiten Antriebsaggregats (3) bereitgestellt wird, **dadurch gekennzeichnet, dass** nach dem Auswählen der Drehmomentkennlinie (14) eine der Drehmomentkennlinie (14) entsprechende konstante Drosselklappenstellung an dem ersten Antriebsaggregat (2) und/oder ein Ventiltrieb des ersten Antriebsaggregats (2) auf eine der Drehmomentkennlinie (14) entsprechende konstante Füllung eingestellt wird.

7. Antriebseinrichtung nach Anspruch 6, **dadurch gekennzeichnet, dass** das erste Antriebsaggregat (2) eine erste Nennleistung und das zweite Antriebsaggregat (3) eine zweite Nennleistung aufweist, wobei die erste Nennleistung um einen Faktor von höchstens 5, höchstens 4, höchstens 3 oder höchstens 2 größer ist als die zweite Nennleistung oder gleich der zweiten Nennleistung gewählt ist.

8. Antriebseinrichtung nach einem der Ansprüche 6 und 7, **dadurch gekennzeichnet, dass** das erste Antriebsaggregat (2) und das zweite Antriebsaggregat (3) mittels eines gemeinsamen Kühlers temperiert sind.

## Claims

1. Method for operating a drive device (1) for a motor vehicle, the drive device (1) having a first drive unit (2) in the form of an internal combustion engine and a second drive unit (3) in the form of an electric motor, which at least from time to time jointly provide a drive torque of the drive device (1) on an output shaft (8), wherein the drive torque is set to a requested preset torque, wherein in a first operating mode, before a speed of the output shaft (8) is changed, for the first drive unit (2) a torque characteristic (14) is selected from a plurality of torque characteristics (14), wherein, in the first operating mode, during the changing of the speed, the first drive unit (2) is operated exclusively in accordance with the selected torque characteristic (14) for providing at least part of the preset torque and a differential torque of the preset torque to the torque provided by the first drive unit (2) is provided by means of the second drive unit (3), **characterised in that,** after the torque characteristic (14) has been selected, a constant throttle valve position corresponding to the torque characteristic (14) is set on the first drive unit (2) and/or a valve train of the first drive unit (2) is set to a constant filling corresponding to the torque characteristic (14).

2. Method according to claim 1, **characterised in that** the selection of the torque characteristic (14) is carried out on the basis of a preset torque present before the speed is changed and/or a charge level of an energy storage device for the second drive unit (3) and/or a temperature of the drive device (1).

3. Method according to any one of the preceding claims, **characterised in that** the selected torque characteristic (14) is retained until a change of gear of a gear change transmission (7) and the torque characteristic (14) is only selected again from the plurality of torque characteristics (14) upon the change of gear.

4. Method according to any one of the preceding claims, **characterised in that** the plurality of torque characteristics (14) comprises a number of discrete torque characteristics (14) whose torques differ by at least 5%, at least 10%, at least 15% or at least 20% of a nominal torque of the first drive unit (2) at a given speed.

5. Method according to any one of the preceding claims, **characterised in that,** in a second operating mode, the first drive unit (2) and the second drive unit (3) are operated to provide the drive torque corresponding to the preset torque in such a way that a minimum energy consumption results for an instantaneous operating point.

6. Drive device (1) for a motor vehicle, in particular for carrying out the method according to one or more of the preceding claims, which has a first drive unit (2) in the form of an internal combustion engine and a second drive unit (3) in the form of an electric motor, which at least from time to time jointly provide a drive torque of the drive device (1) on an output shaft (8), wherein the drive torque can be set to a requested preset torque, wherein the drive device (1) is adapted to select a torque characteristic (14) from a plurality of torque characteristics (14) in a first operating mode before a speed of the output shaft (8) for the first drive unit (2) is changed, wherein, in the first operating mode, during the changing of the speed, the first drive unit (2) is operated exclusively in accordance with the selected torque characteristic (14) for providing at least part of the preset torque and a differential torque of the preset torque to the torque provided by the first drive unit (2) is provided by means of the second drive unit (3), **characterised in that,** after the torque characteristic (14) has been selected, a constant throttle valve position corresponding to the torque characteristic (14) is set on the first drive unit (2) and/or a valve train of the first drive unit (2) is set to a constant filling corresponding to the torque characteristic (14).

7. Drive device according to claim 6, **characterised in that** the first drive unit (2) has a first power rating and the second drive unit (3) has a second power rating, wherein the first power rating is selected to be greater than the second power rating by a factor of at most 5, at most 4, at most 3 or at most 2 or to be equal to the second power rating.

8. Drive device according to any one of claims 6 and 7, **characterised in that** the first drive unit (2) and the second drive unit (3) are temperature-controlled by means of a common cooler.

## Revendications

1. Procédé pour faire fonctionner un appareil de propulsion (1) pour un véhicule à moteur, l'appareil de propulsion (1) présentant un premier groupe motopropulseur (2) réalisé sous la forme d'un moteur à combustion interne et un second groupe motopropulseur (3) réalisé sous la forme d'un moteur électrique, qui fournissent au moins par intermittence conjointement un couple d'entraînement de l'appareil de propulsion (1) à un arbre de sortie (8), le couple d'entraînement étant réglé sur un couple prescrit requis, dans lequel dans un premier mode de fonctionnement, avant une modification d'un régime de l'arbre de sortie (8), une courbe caractéristique de couple (14) est sélectionnée pour le premier groupe motopropulseur (2) parmi plusieurs courbes caractéristiques de couple (14), dans lequel dans le premier mode de fonctionnement, pendant la modification du régime, le premier groupe motopropulseur (2) fonctionne exclusivement de manière correspondante à la courbe caractéristique de couple (14) sélectionnée pour la fourniture d'au moins une partie du couple prescrit et un couple différentiel du couple prescrit par rapport au couple fourni par le premier groupe motopropulseur (2) est fourni au moyen du second groupe motopropulseur (3), **caractérisé en ce que** après la sélection de la courbe caractéristique de couple (14), une position constante du volet d'étranglement correspondant à la courbe caractéristique de couple (14) est sélectionnée au niveau du premier groupe motopropulseur (2) et/ou une commande de soupape du premier groupe motopropulseur (2) est réglée sur un remplissage constant correspondant à la courbe caractéristique de couple (14).

2. Procédé selon la revendication 1, **caractérisé en ce, que** la sélection de la courbe caractéristique de couple (14) est effectuée au moyen d'un présent couple prescrit avant la modification du régime et/ou d'un état de chargement d'un accumulateur d'énergie pour le second groupe motopropulseur (3) et/ou d'une température de l'appareil de propulsion (1).

3. Procédé selon l'une quelconque des revendications précédentes, **caractérisé en ce que** la courbe caractéristique de couple (14) sélectionnée est maintenue jusqu'à un changement de vitesse d'une boîte de vitesses (7) et seulement lors du changement de vitesse, la courbe caractéristique de couple (14) est de nouveau sélectionnée à partir des plusieurs courbes caractéristiques de couple (14).

4. Procédé selon l'une quelconque des revendications précédentes, **caractérisé en ce que** les plusieurs courbes caractéristiques de couple (14) comprennent une pluralité de courbes caractéristiques de couple discrètes (14) dont les couples se différencient à un régime défini d'au moins 5 %, d'au moins 10 %, d'au moins 15 % ou d'au moins 20 % d'un couple nominal du premier groupe motopropulseur (2).

5. Procédé selon l'une quelconque des revendications précédentes, **caractérisé en ce que** dans un second mode de fonctionnement, le premier groupe motopropulseur (2) et le second groupe motopropulseur (3) fonctionnent en vue de fournir le couple d'entraînement correspondant au couple prescrit, de telle sorte qu'une consommation d'énergie minimale est mise en œuvre pour un point de fonctionnement instantané.

6. Appareil de propulsion (1) pour un véhicule à moteur, en particulier en vue de réaliser le procédé selon l'une quelconque des revendications précédentes, l'appareil de propulsion (1) présentant un premier groupe motopropulseur (2) réalisé sous la forme d'un moteur à combustion interne et un second groupe motopropulseur (3) réalisé sous la forme d'un moteur électrique, qui fournissent au moins par intermittence conjointement un couple d'entraînement de l'appareil de propulsion (1) à un arbre de sortie (8), le couple d'entraînement étant réglé sur un couple prescrit requis, dans lequel l'appareil de propulsion (1) est conçu pour sélectionner dans un premier mode de fonctionnement, avant une modification d'un régime de l'arbre de sortie (8), une courbe caractéristique de couple (14) pour le premier groupe motopropulseur (2) parmi plusieurs courbes caractéristique de couple (14), dans lequel dans le premier mode de fonctionnement pendant la modification du régime, le premier groupe motopropulseur (2) fonctionne exclusivement de manière correspondante à la courbe caractéristique de couple (14) sélectionnée pour la fourniture d'au moins une partie du couple prescrit et un couple différentiel du couple prescrit par rapport au couple fourni par le premier groupe motopropulseur (2) est fourni au moyen du second groupe motopropulseur (3), **caractérisé en ce que** après la sélection de la courbe caractéristique de couple (14), une position constante du volet d'étranglement correspondant à la courbe caractéristique de couple (14) est réglée au niveau du premier groupe motopropulseur (2) et/ou une commande de soupape du premier groupe motopropulseur (2) est réglée sur un remplissage constant correspondant à la courbe caractéristique de couple.

7. Appareil de propulsion selon la revendication 6, **caractérisé en ce que** le premier groupe motopropulseur (2) présente une première puissance nominale et le second groupe motopropulseur (3) présente une seconde puissance nominale, la première puissance nominale étant sélectionnée supérieure d'un facteur au maximum de 5, au maximum de 4, au maximum de 3 ou au maximum de 2 à la seconde puissance nominale ou est sélectionnée identique à la seconde puissance nominale.

8. Appareil de propulsion selon l'une quelconque des revendications 6 et 7, **caractérisé en ce que** le premier groupe motopropulseur (2) et le second groupe motopropulseur (3) sont régulés en température au moyen d'un radiateur commun.
